# FASCICULE DE BREVET EUROPEEN

(11) **EP 2 782 105 B1**
(45) Date de publication et mention de la délivrance du brevet: **21.03.2018**
(21) Numéro de dépôt: 14156905.3
(22) Date de dépôt: 27.02.2014
(51) Int. Cl.: H01F 3/14, H01F 37/00, H01F 17/00

(54) **Inductance de mode différentiel et de mode commun**
Gegentakt- und Gleichtaktdrossel
Differential mode and common mode choke

(30) Priorité: 20.03.2013 FR 1352471
(43) Date de publication de la demande: 24.09.2014
(73) Titulaire: Schneider Toshiba Inverter Europe SAS, 27120 Pacy sur Eure (FR)
(72) Inventeur: Allaert, Yves-Laurent, 27200 VERNON (FR); Planque, Cyrille, 27120 Pacy sur Eure (FR)
(74) Mandataire: Dufresne, Thierry

(56) Documents cités:
- EP-A1- 0 579 962
- EP-A1- 1 519 392
- EP-A2- 2 068 430
- WO-A1-2008/097758
- JP-A- H11 204 355
- US-A1- 2013 033 351
- US-A1- 2013 049 918

## Description

### Domaine technique de l'invention

La présente invention se rapporte à une inductance agencée pour filtrer en mode différentiel et en mode commun.

### Etat de la technique

De manière connue, un convertisseur de puissance comporte un bus continu d'alimentation alimenté par une source de tension continue, un condensateur de bus destiné à maintenir la tension continue du bus à une valeur constante et un module onduleur destiné à convertir la tension continue fournie par le bus en une tension variable à destination d'une charge électrique. Dans un convertisseur de puissance de type variateur de vitesse, la source de tension continue comporte un module redresseur connecté à un réseau de distribution électrique et destiné à redresser la tension alternative fournie par le réseau et à appliquer une tension continue sur le bus continu d'alimentation.

Il est également connu de connecter une inductance sur le bus continu d'alimentation de manière à agir sur le THDi ("Total Harmonic Distortion of Current") et le PWHD ("Partial Weighted Harmonic Distortion").

Le THDi correspond au taux de distorsion harmonique en courant et représente donc la valeur efficace des harmoniques rapportée à la valeur efficace du courant fondamental. Le PWHD introduit pour sa part une pondération donnant davantage de poids aux harmoniques à haute fréquence, plus particulièrement ceux des rangs 14 à 40.

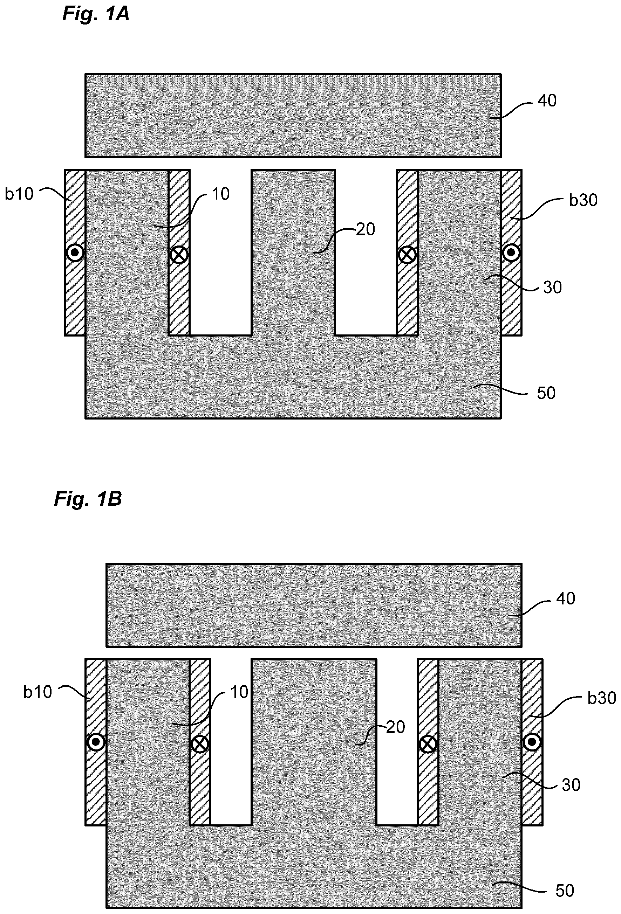

Il est connu de l'état de la technique de réaliser une inductance couplée permettant de filtrer en mode différentiel et en mode commun (figures 1A et 1B). Ce type d'inductance comporte un noyau ferromagnétique comprenant une partie supérieure 40 et trois branches 10, 20, 30 reliées entre elles par une partie inférieure 50, chacune des trois branches étant séparée de la partie supérieure par un entrefer. Une première bobine b10 est enroulée autour de l'une des branches latérales et une deuxième bobine b30 est enroulée autour de l'autre branche latérale, la branche centrale restant nue. Ces architectures d'inductance sont souvent réalisés en empilant des tôles magnétiques de taille standard. Si les tôles magnétiques standards sont celles d'une inductance triphasée, les trois branches sont alors identiques et les trois entrefers le sont également (figure 1A). Il en ressort que les caractéristiques de filtrage en mode commun de cette inductance sont entièrement fixées par ses caractéristiques de filtrage en mode différentiel. Par ailleurs, si les tôles magnétiques standards employées sont celles d'une inductance monophasée, la branche centrale se trouve être d'une taille disproportionnée par rapport à la taille des deux branches latérales (figure 1B).

Par conséquent, concevoir un noyau ferromagnétique dans lequel les tailles des différentes branches sont optimisées, en ajustant de manière indépendante le filtrage de mode commun et le filtrage de mode différentiel, oblige à avoir recours à un matériau usinable ou pouvant être moulé.

Le document JP H11 204355A décrit pour sa part une solution permettant de fusionner deux inductances en une seule afin de rentabiliser le circuit magnétique disponible dans le système. Le document US 2013/0049918 A1 décrit une inductance de mode différentiel et de mode commun selon le préambule de la revendication 1. Le but de l'invention est de proposer une inductance permettant un filtrage de mode commun et un filtrage de mode différentiel, en s'affranchissant des contraintes de volumes standards disponibles sur le marché. L'inductance de l'invention pourra notamment être fabriquée par empilement de tôles magnétiques.

Ce but est atteint par une inductance de mode différentiel et de mode commun selon la revendication 1. Selon une particularité, la première branche latérale et la deuxième branche latérale sont fabriquées par empilement de tôles magnétiques ou par usinage ou moulage de matériau magnétique.

Selon une autre particularité, la branche centrale est fabriquée par empilement de tôles magnétiques ou par usinage ou moulage de matériau magnétique.

Selon une autre particularité, la partie supérieure et la partie inférieure sont fabriquées par empilement de tôles magnétiques ou par usinage ou moulage de matériau magnétique.

L'invention concerne également un convertisseur de puissance destiné à être connecté à une charge électrique et comportant :
- un bus continu d'alimentation doté d'une première ligne d'alimentation et d'une deuxième ligne d'alimentation,
- un condensateur de bus connecté à la première ligne d'alimentation et à la deuxième ligne d'alimentation et destiné à maintenir constante une tension continue sur le bus continu d'alimentation,
- un module onduleur connecté au bus continu d'alimentation, en aval du condensateur de bus, et destiné à convertir la tension continue en une tension variable à appliquer à la charge électrique,
- une inductance de mode différentiel et de mode commun conforme à celle définie ci-dessus, la première bobine étant connectée en série sur la première ligne d'alimentation et la deuxième bobine étant connectée en série sur la deuxième ligne d'alimentation,
- ladite première bobine est enroulée autour de la première branche latérale et connectée à la première ligne d'alimentation de manière à pouvoir générer un premier flux magnétique de mode commun dans un sens dans la branche centrale et un premier flux magnétique de mode différentiel dans un sens dans la branche centrale,
- ladite deuxième bobine est enroulée autour de la deuxième branche latérale de manière à pouvoir générer un deuxième flux magnétique de mode commun identique au premier flux magnétique de mode commun et circulant dans la branche centrale, dans le même sens que celui du premier flux magnétique de mode commun, et un deuxième flux magnétique de mode différentiel dans la branche centrale dans un sens contraire à celui du premier flux magnétique de mode différentiel, créant un flux résultant de mode différentiel nul dans la branche centrale.

### Brève description des figures

D'autres caractéristiques et avantages vont apparaître dans la description détaillée qui suit faite en regard des dessins annexés dans lesquels :
- les figures 1A et 1B représentent deux architectures d'inductance connues dans l'art antérieur,
- la figure 2 représente l'inductance de l'invention et montre les chemins des flux magnétiques de mode commun et de mode différentiel dans ladite inductance,
- la figure 3 représente un convertisseur de puissance équipé de l'inductance de l'invention.

### Description détaillée d'au moins un mode de réalisation

Les figures 1A et 1B représentent des architectures d'inductance connues dans l'état de la technique et déjà décrites ci-dessus.

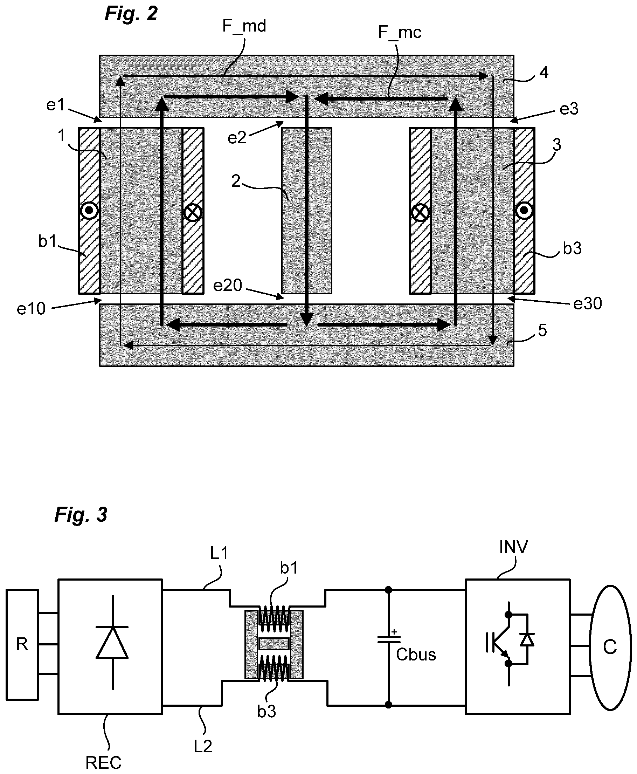

En référence à la figure 2, l'inductance de l'invention permet un filtrage en mode différentiel et un filtrage en mode commun. Par ailleurs, elle présente l'avantage de pouvoir régler la valeur de l'inductance en mode commun, de manière indépendante de la valeur de l'inductance en mode différentiel. L'inductance de l'invention comporte un noyau ferromagnétique présentant une forme de huit (couché sur la figure 2). Il comprend ainsi une partie supérieure 4, une partie inférieure 5 et trois branches parallèles 1, 2, 3 s'étendant entre la partie supérieure 4 et la partie inférieure 5. Les trois branches sont ainsi agencées entre la partie supérieure et la partie inférieure de manière à présenter une première branche latérale 1, une deuxième branche latérale 3 et une branche centrale 2.

Préférentiellement, la première branche latérale 1 et la deuxième branche latérale 3 sont identiques et sont donc d'une même épaisseur. La branche centrale 2 peut présenter une taille variable selon les besoins en CEM (compatibilité électromagnétique) de l'appareil électrique qui l'accueille. La branche centrale 2 peut ainsi avoir une taille qui va de 0 à 100% de la taille des branches latérales 1, 3.

Selon l'invention, la première branche latérale 1 est séparée de la partie supérieure 4 par un premier entrefer e1 et de la partie inférieure 5 par un deuxième entrefer e10.

La deuxième branche latérale 3 est séparée de la partie supérieure 4 par un premier entrefer e3 et de la partie inférieure 5 par un deuxième entrefer e30.

La branche centrale 2 est séparée de la partie supérieure 4 par un premier entrefer e2 et de la partie inférieure 5 par un deuxième entrefer e20.

Selon l'invention, les trois branches 1, 2, 3 sont donc indépendantes par rapport aux parties supérieure 4 et inférieure 5. Il est donc aisé d'ajuster leur taille de manière indépendante et donc de régler la valeur de l'inductance du filtrage réalisé par chacune d'elle. Par ailleurs, en les réalisant de manière indépendante, il est possible de les fabriquer selon différents procédés, en minimisant les chutes de matière. Les trois branches 1, 2, 3 de l'inductance pourront ainsi être fabriquée par assemblage de tôles magnétiques ou par usinage ou moulage d'un matériau magnétique. De même, la partie supérieure 4 et la partie inférieure 5 pourront être fabriquées par assemblage de tôles magnétiques ou par usinage ou moulage d'un matériau magnétique.

Selon l'invention, une première bobine b1 est enroulée autour de la première branche latérale et une deuxième bobine b3 est enroulée autour de la deuxième branche latérale. La branche centrale ne supporte aucune bobine (figure 2). Selon l'invention, la première bobine b1 présente une valeur d'inductance égale à la valeur d'inductance de la deuxième bobine b2.

L'inductance de l'invention sera notamment adaptée pour se connecter sur un convertisseur de puissance, du type variateur de vitesse. En référence à la figure 3, un convertisseur de puissance comporte :
- un bus continu d'alimentation alimenté par une source de tension continue. Le bus continu d'alimentation comporte une première ligne d'alimentation L1 et une deuxième ligne d'alimentation L2. L'une de ces deux lignes d'alimentation est à un potentiel électrique positif et l'autre de ces deux lignes d'alimentation est à un potentiel électrique négatif,
- un condensateur de bus Cbus destiné à maintenir la tension du bus Vbus à une valeur constante et connecté à la première ligne d'alimentation L1 et à la deuxième ligne d'alimentation L2,
- un module onduleur INV connecté en aval du bus continu d'alimentation et destiné à convertir la tension continue présente sur le bus en une tension variable à destination de la charge électrique. Le module onduleur INV comporte plusieurs bras de commutation comprenant chacun au moins deux transistors de puissance.

Un convertisseur de puissance de type variateur de vitesse comporte également, en amont du condensateur de bus Cbus, un module redresseur REC connecté à un réseau de distribution électrique R et destiné à redresser une tension alternative fournie par le réseau de distribution électrique R et à appliquer la tension continue sur le bus continu d'alimentation.

Selon l'invention, le convertisseur de puissance comporte une inductance de l'invention, connectée sur le bus continu d'alimentation, en amont du condensateur de bus Cbus. L'inductance est connectée au bus continu d'alimentation de sorte que sa première bobine b1 soit connectée en série sur la première ligne d'alimentation L1 et que sa deuxième bobine b3 soit connectée en série sur la deuxième ligne d'alimentation L2.

Ainsi, en référence à la figure 2, la première bobine b1 est enroulée autour de la première branche latérale 1 et connectée à la première ligne d'alimentation L1 de manière à pouvoir générer un premier flux magnétique de mode commun dans la première branche latérale et suivant un sens donné dans la branche centrale 2, et un premier flux magnétique de mode différentiel dans un sens donné dans la branche centrale 2. La deuxième bobine est enroulée autour de la deuxième branche latérale 3 de manière à pouvoir générer un deuxième flux magnétique de mode commun identique au premier flux magnétique de mode commun et circulant dans la deuxième branche latérale 3 et dans la branche centrale 2, dans un même sens que celui du premier flux magnétique de mode commun, et un deuxième flux magnétique de mode différentiel dans la branche centrale 2 dans un sens contraire au sens du premier flux magnétique de mode différentiel, créant un flux résultant de mode différentiel nul dans la branche centrale 2.

En référence à la figure 2, le flux magnétique de mode différentiel F_md traverse ainsi la partie supérieure 4, la deuxième branche latérale 3, la partie inférieure 5 et la première branche latérale 1. Le flux de mode commun F_mc circule à travers chaque branche latérale vers la branche centrale en traversant la partie supérieure et la partie inférieure.

La branche centrale est donc dédiée uniquement au mode commun et à la gestion de la CEM. Ainsi, l'agencement et le câblage des bobines permettent de découpler la valeur de l'inductance de mode commun de celle de mode différentiel.

L'agencement particulier de l'inductance de l'invention avec des branches indépendantes permet ainsi de pouvoir facilement régler les valeurs d'inductance en jouant sur la taille des branches et sur les entrefers présents entre les branches et les parties supérieure et inférieure et donc d'adapter l'architecture de l'inductance à l'application souhaitée.

## Revendications

1. Inductance de mode différentiel et de mode commun comprenant :
- un noyau ferromagnétique comprenant trois branches (1, 2, 3) s'étendant entre une partie inférieure (5) et une partie supérieure (4), lesdites trois branches comprenant une première branche latérale (1), une deuxième branche latérale (3) et une branche centrale (2),
- la branche centrale (2) étant séparée de la partie supérieure (4) par un premier entrefer (e2) et de la partie inférieure (5) par un deuxième entrefer (e20),
- une première bobine (b1) enroulée autour de la première branche latérale (1),
- une deuxième bobine (b3) enroulée autour de la deuxième branche latérale (3),
ladite inductance étant **caractérisée en ce que** :
- la première branche latérale (1) est séparée de la partie supérieure (4) par un premier entrefer (e1) et de la partie inférieure (5) par un deuxième entrefer (e10),
- la deuxième branche latérale (3) est séparée de la partie supérieure (4) par un premier entrefer (e3) et de la partie inférieure (5) par un deuxième entrefer (e30),
- ladite première bobine (b1) a une première valeur d'inductance,
- ladite deuxième bobine (b2) a une deuxième valeur d'inductance, égale à la première valeur d'inductance.

2. Inductance selon la revendication 1, **caractérisée en ce que** la première branche latérale (1) et la deuxième branche latérale (3) sont fabriquées par empilement de tôles magnétiques.

3. Inductance selon la revendication 1, **caractérisée en ce que** la première branche latérale (1) et la deuxième branche latérale (3) sont fabriquées par usinage ou moulage de matériau magnétique.

4. Inductance selon la revendication 1, **caractérisée en ce que** la branche centrale (2) est fabriquée par empilement de tôles magnétiques.

5. Inductance selon la revendication 1, **caractérisée en ce que** la branche centrale (2) est fabriquée par usinage ou moulage de matériau magnétique.

6. Inductance selon la revendication 1, **caractérisée en ce que** la partie supérieure (4) et la partie inférieure (5) sont fabriquées par empilement de tôles magnétiques.

7. Inductance selon la revendication 1, **caractérisée en ce que** la partie supérieure (4) et la partie inférieure (5) sont fabriquées par usinage ou moulage de matériau magnétique.

8. Convertisseur de puissance destiné à être connecté à une charge électrique (C) et comportant :
- un bus continu d'alimentation doté d'une première ligne d'alimentation (L1) et d'une deuxième ligne d'alimentation (L2),
- un condensateur de bus (Cbus) connecté à la première ligne d'alimentation (L1) et à la deuxième ligne d'alimentation (L2) et destiné à maintenir constante une tension continue sur le bus continu d'alimentation,
- un module onduleur (INV) connecté au bus continu d'alimentation, en aval du condensateur de bus (Cbus), et destiné à convertir la tension continue en une tension variable à appliquer à la charge électrique (C),
- **caractérisé en ce qu'**il comporte une inductance de mode différentiel et de mode commun conforme à celle définie dans l'une des revendications 1 à 7, la première bobine (b1) étant connectée en série sur la première ligne d'alimentation (L1) et la deuxième bobine (b3) étant connectée en série sur la deuxième ligne d'alimentation (L2),
- ladite première bobine (b1) est enroulée autour de la première branche latérale et connectée à la première ligne d'alimentation (L1) de manière à pouvoir générer un premier flux magnétique de mode commun dans un sens donné dans la branche centrale (2) et un premier flux magnétique de mode différentiel dans un sens donné dans la branche centrale (2),
- ladite deuxième bobine est enroulée autour de la deuxième branche latérale (3) de manière à pouvoir générer un deuxième flux magnétique de mode commun identique au premier flux magnétique de mode commun et circulant dans la branche centrale (2), dans un même sens que celui du premier flux magnétique de mode commun, et un deuxième flux magnétique de mode différentiel dans la branche centrale (2) dans un sens contraire au sens du premier flux magnétique de mode différentiel, créant un flux résultant de mode différentiel nul dans la branche centrale (2).

## Patentansprüche

1. Gegen- und Gleichtakt-Drosselspule, umfassend:
- einen sich zwischen einem Unterteil (5) und einem Oberteil (4) erstreckenden ferromagnetischen Kern, umfassend drei Schenkel (1, 2, 3), wobei die drei Schenkel einen ersten Seitenschenkel (1), einen zweiten Seitenschenkel (3) und einen Mittelschenkel (2) umfassen,
- wobei der Mittelschenkel (2) vom Oberteil (4) durch einen ersten Spalt (e2) und vom Unterteil (5) durch einen zweiten Spalt (e20) getrennt ist,
- eine um den ersten Seitenschenkel (1) gewickelte erste Wicklung (b1),
- eine um den zweiten Seitenschenkel (3) gewickelte zweite Wicklung (b3),
wobei die Drosselspule **dadurch gekennzeichnet ist, dass**:
- der erste Seitenschenkel (1) vom Oberteil (4) durch einen ersten Spalt (e1) und vom Unterteil (5) durch einen zweiten Spalt (e10) getrennt ist,
- der zweite Seitenschenkel (3) vom Oberteil (4) durch einen ersten Spalt (e3) und vom Unterteil (5) durch einen zweiten Spalt (e30) getrennt ist,
- die erste Wicklung (b1) einen ersten Induktanzwert aufweist,
- die zweite Wicklung (b2) einen zweiten Induktanzwert gleich dem ersten Induktanzwert aufweist.

2. Drosselspule nach Anspruch 1, **dadurch gekennzeichnet, dass** der erste Seitenschenkel (1) und der zweite Seitenschenkel (3) durch Schichten von magnetischen Blechen hergestellt werden.

3. Drosselspule nach Anspruch 1, **dadurch gekennzeichnet, dass** der erste Seitenschenkel (1) und der zweite Seitenschenkel (3) durch Bearbeiten oder Formen von magnetischem Material hergestellt werden.

4. Drosselspule nach Anspruch 1, **dadurch gekennzeichnet, dass** der Mittelschenkel (2) durch Schichten von magnetischen Blechen hergestellt wird.

5. Drosselspule nach Anspruch 1, **dadurch gekennzeichnet, dass** der Mittelschenkel (2) durch Bearbeiten oder Formen von magnetischem Material hergestellt wird.

6. Drosselspule nach Anspruch 1, **dadurch gekennzeichnet, dass** der Oberteil (4) und der Unterteil (5) durch Schichten von magnetischen Blechen hergestellt werden.

7. Drosselspule nach Anspruch 1, **dadurch gekennzeichnet, dass** der Oberteil (4) und der Unterteil (5) durch Bearbeiten oder Formen von magnetischem Material hergestellt werden.

8. Zum Verbinden mit einer elektrischen Last (C) ausgebildeter Leistungswandler, umfassend:
- einen mit einer ersten Versorgungsleitung (L1) und einer zweiten Versorgungsleitung (L2) ausgestatteten Gleichstrom-Versorgungskreis,
- einen mit der ersten Versorgungsleitung (L1) und der zweiten Versorgungsleitung (L2) verbundenen und zum Konstanthalten einer Gleichspannung auf dem Gleichstrom-Versorgungskreis ausgebildeten Kreiskondensator (Cbus),
- ein mit dem Gleichstrom-Versorgungskreis stromaufwärts vom Kreiskondensator (Cbus) verbundenes und zum Umformen der Gleichspannung in eine Wechselspannung zur Beaufschlagung der elektrischen Last (C) ausgebildetes Wechselrichtermodul (INV-Modul),
- **dadurch gekennzeichnet, dass** er eine Gegen- und Gleichtakt-Drosselspule wie die nach einem der Ansprüche 1 bis 7 definierte umfasst, wobei die erste Wicklung (b1) in Reihe mit der ersten Versorgungsleitung (L1) verbunden ist und die zweite Wicklung (b3) in Reihe mit der zweiten Versorgungsleitung (L2) verbunden ist,
- die erste Wicklung (b1) um den ersten Seitenschenkel gewickelt und mit der ersten Versorgungsleitung (L1) so verbunden ist, dass ein erster Gleichtakt-Magnetfluss in einer vorgegebenen Richtung im Mittelschenkel (2) und ein erster Gegentakt-Magnetfluss in einer vorgegebenen Richtung im Mittelschenkel (2) erzeugt werden kann,
- die erste Wicklung um den zweiten Seitenschenkel (3) so gewickelt ist, dass ein mit dem ersten Gleichtakt-Magnetfluss identischer und im Mittelschenkel (2) zirkulierender zweiter Gleichtakt-Magnetfluss in einer gleichen Richtung wie die des ersten Gleichtakt-Magnetflusses und ein zweiter Gegentakt-Magnetfluss im Mittelschenkel (2) in einer Richtung entgegengesetzt zur Richtung des ersten Gegentakt-Magnetflusses erzeugt werden, wobei ein resultierender Gegentaktfluss gleich Null im Mittelschenkel (2) erzeugt wird.

## Claims

1. Differential mode and common mode choke comprising:
- a ferromagnetic core comprising three branches (1, 2, 3) extending between a bottom part (5) and a top part (4), said three branches comprising a first lateral branch (1), a second lateral branch (3) and a central branch (2),
- the central branch (2) being separated from the top part (4) by a first air gap (e2) and from the bottom part (5) by a second air gap (e20),
- a first coil (b1) wound around the first lateral branch (1),
- a second coil (b3) wound around the second lateral branch (3),
said choke being **characterized in that**:
- the first lateral branch (1) is separated from the top part (4) by a first air gap (e1) and from the bottom part (5) by a second air gap (e10),
- the second lateral branch (3) is separated from the top part (4) by a first air gap (e3) and from the bottom part (5) by a second air gap (e30),
- said first coil (b1) has a first inductance value,
- said second coil (b2) has a second inductance value, equal to the first inductance value.

2. Choke according to Claim 1, **characterized in that** the first lateral branch (1) and the second lateral branch (3) are manufactured by stacking magnetic plates.

3. Choke according to Claim 1, **characterized in that** the first lateral branch (1) and the second lateral branch (3) are manufactured by machining or casting magnetic material.

4. Choke according to Claim 1, **characterized in that** the central branch (2) is manufactured by stacking magnetic plates.

5. Choke according to Claim 1, **characterized in that** the central branch (2) is manufactured by machining or casting magnetic material.

6. Choke according to Claim 1, **characterized in that** the top part (4) and the bottom part (5) are manufactured by stacking magnetic plates.

7. Choke according to Claim 1, **characterized in that** the top part (4) and the bottom part (5) are manufactured by machining or casting magnetic material.

8. Power converter intended to be connected to an electrical load (C) and comprising:
- a DC power supply bus provided with a first power supply line (L1) and a second power supply line (L2),
- a bus capacitor (Cbus) connected to the first power supply line (L1) and to the second power supply line (L2) and designed to keep a DC voltage constant on the DC power supply bus,
- an inverter module (INV) connected to the DC power supply bus, downstream of the bus capacitor (Cbus), and intended to convert the DC voltage into a variable voltage to be applied to the electrical load (C),
- **characterized in that** it comprises a differential mode and common mode choke conforming to that defined in one of Claims 1 to 7, the first coil (b1) being connected in series to the first power supply line (L1) and the second coil (b3) being connected in series to the second power supply line (L2),
- said first coil (b1) is wound around the first lateral branch and connected to the first power supply line (L1) so as to be able to generate a first common mode magnetic flux in a given direction in the central branch (2) and a first differential mode magnetic flux in a given direction in the central branch (2),
- said second coil is wound around the second lateral branch (3) so as to be able to generate a second common mode magnetic flux identical to the first common mode magnetic flux and circulating in the central branch (2), in the same direction as that of the first common mode magnetic flux, and a second differential mode magnetic flux in the central branch (2) in a direction opposite to the direction of the first differential mode magnetic flux, creating a zero resultant differential mode flux in the central branch (2).
